# EUROPEAN PATENT SPECIFICATION

(11) **EP 0 759 810 B1**
(45) Date of publication and mention of the grant of the patent: **19.01.2000**
(21) Application number: 94923968.5
(22) Date of filing: 19.07.1994
(51) Int. Cl.: B01J 37/14, C08F 4/02, C08F 4/22, C08F 4/78

(54) **PREPARATION OF CHROMIUM-CONTAINING SUPPORTED CATALYSTS**
VERFAHREN ZUR HERSTELLUNG VON CHROM ENTHALTENDEN TRÄGERKATALYSATOREN
PREPARATION DE CATALYSEURS SUR SUPPORTS CONTENANT DU CHROME

(30) Priority: 11.05.1994 US 241084
(43) Date of publication of application: 05.03.1997
(73) Proprietor: W.R. GRACE & CO.-CONN., New York New York 10036 (US)
(72) Inventor: MULLEN, Jeffrey, Donald, Pasadena, MD 21122 (US); KITAGUCHI, Joel, Lee, Glen Burnie, MD 21060 (US); MORAN, Darvin, Randal, Severn, MD 21144 (US)
(74) Representative: Senior, Alan Murray
(86) International application number: US9408128
(87) International publication number: WO9531283

(56) References cited:
- EP-A- 0 535 516
- US-A- 4 182 815
- US-A- 4 436 883
- US-A- 5 372 983

## Description

### Background of the Invention

The present invention relates to the production of oxide gel-based supported catalysts, and more specifically to an improved method for preparing oxide gel-based supported catalysts derived from aqueous hydrogels which have been treated with organic solvents.

Often in commercial practice, oxide gel-based supported catalysts are made by forming an initial porous hydrogel in an aqueous medium. In order to render the gel suitable for use in catalytic processes, it is necessary to remove water from the gel. Organic solvents are often used to treat the gel as part of the water removal process. The organic solvent must then be removed from the gel at a later stage in forming the supported catalyst.

U.S. 4,436,883 discloses a method for preparing silica-titanium-chromium polymerization catalysts wherein a silica-titanium-chromium hydrogel (tergel) is treated with a C₅-C₆ alcohol to obtain a xerogel, and the xerogel is heated (calcined) in an inert atmosphere (N₂) to remove sorbed alcohol prior to activation in the presence of oxygen (activation).

While the above-noted process produces an active olefin polymerization catalyst, it is found that the use of a high temperature alcohol removal step in the presence of nitrogen frequently results in a catalyst that is unacceptably high in carbon.

Furthermore, attempts to remove excess carbon from Cr III (trivalent)-containing catalysts during the manufacturing process by oxidation (heating in air), may result in a catalyst that contains excessive quantities of toxic Cr VI (hexavalent) which is undesirable from the standpoint of material handling and shipping.

### Summary of the Invention

It is therefore an object of the present invention to provide an improved process for manufacturing oxide gel-based supported chrominum-containing polymerization catalysts from organic solvent-treated hydrogels which results in reduced carbon content while avoiding the conversion of Cr III to Cr VI.

It is a further object to provide a method by which the carbon content of chromium III-containing catalysts may be reduced to a level of below about one weight percent while substantially avoiding conversion of Cr III to Cr VI.

It is still a further object to provide a method for preparing low carbon non-activated Cr III catalysts that may be readily packaged, shipped, and handled for use in an olefin polymerization process.

These and still further objects will become readily apparent to one skilled-in-the-art from the following detailed description and specific examples.

### Detailed Description of the Invention

Broadly, the invention contemplates supported catalyst manufacturing processes wherein an inorganic oxide xerogel, which has been obtained by treating a hydrogel with an organic solvent is subjected to controlled high temperature partial oxidation to remove sorbed organic solvent.

More specifically, the present invention provides a method for preparing an inorganic oxide gel-based chromium-containing catalyst wherein an inorganic oxide hydrogel is treated with an organic solvent to obtain a xerogel which is calcined to remove said organic solvent, characterised in that the calcination is conducted at a temperature of from 450 to 700°C, preferably 450 to 677°C in a gaseous atmosphere which comprises 3 to 6 volume percent oxygen admixed with an inert gas for a period of 5 to 15 minutes, whereby the carbon content of said xerogel is reduced to below one weight percent.

The partial oxidation is conducted in an atmosphere that contains from 15 to 30, preferably 18 to 26, volume percent air or 3 to 6, preferably 3.6 to 5.2, volume percent O₂ mixed with an inert gas (typically nitrogen). The partial oxidation is preferably conducted for a period of 5 to 15 minutes and preferably 8 to 12 minutes. 0.1 to 0.5, preferably 0.2 to 0.4, parts by weight air or 0.02 to 0.12, preferably 0.05 to 0.1, parts by weight O₂ is mixed with each part by weight organic solvent contained in the xerogel.

The oxide gel-based catalyst obtained by the above process contains less than one weight percent carbon, preferably below about 0.8 weight percent carbon. Chromium III is added to the gel by any known technique before the partial oxidation (for example, as a cogel component or by impregnation of the aqueous hydrogel). The resulting unactivated xerogel catalyst from the process preferably has about 1.0% chromium VI based on the total chromium in the catalyst.

The chromium-containing catalyst made by any of the above processes is preferably activated by heating in the presence of air at a temperature of 400 to 900°C to convert the chromium III component to chromium VI.

The oxide gels used may be any known inorganic oxide gel or multicomponent gel (e.g. cogel, tergel, etc.). Preferably, the gel is selected on the basis of its suitability as a catalyst or catalyst support. Preferred oxide gels are selected from the group consisting of silica, silica-titania, silica alumina, chromium-silica, silica-titania-chromium, aluminum phosphate, alumina and mixtures thereof.

In the silica-titania-chromium system, the non-activated catalysts preferably contain the following range of components:

| Component | Weight percent |
|---|---|
| SiO₂ | 95 to 100 |
| Ti | 0 to 5 |
| Cr | 0 to 2 |

and the following physical properties:
Pore Volume (N₂) 2.2 to 2.5 cc/g
Surface Area 420 to 550 m²/g
Density 0.18 to 0.25 g/cc
The invention is also applicable to other chromium-containing systems as well as to silica-titania-chromium catalysts having properties different from those stated above.

The inorganic oxide hydrogel used in the method of the invention may be formed by any known process. See for example U.S. Patents 3,652,214, 3,900,457, 4,152,503, and 5,292,701. Where a polyolefin catalyst is the intended use, preferably the hydrogel is prepared by a method known to yield a suitable gel for that purpose.

Preferably, the step (1) treatment involves an azeotropic distillation using an organic solvent such as hexanol. The invention is also applicable where other organic solvent treatments, such as continuous extraction have been used to treat the hydrogel. The invention is not limited to any specific organic solvent. For azeotropic distillation, preferably the aqueous hydrogel is combined with an organic solvent (preferably 1-hexanol) in a reaction vessel in amounts ranging from 1.8 to 2.2 parts by weight hydrogel per part by weight solvent. The mixture is then heated to a temperature of 97 to 99°C to azeotropically distill the water in the hydrogel and to obtain a xerogel which contains 25 to 30 weight percent sorbed organic solvent expressed as percent total volatiles. The xerogel is then preferably dried, ground and sized to a desired particle size range of 40 to 300 microns.

At step (2), the sized xerogel is heated at a temperature of 510 to 677°C, typically in a controlled atmosphere rotary calciner, in the presence of an atmosphere which contains from 18 to 26 percent air by volume in admixture with an inert gas such as nitrogen for a period of 5 to 15 minutes. During the heating, the sorbed solvent is oxidized to CO₂ and water thereby lowering the carbon content of the catalyst to below about one weight percent while avoiding any significant oxidation of Cr III to Cr VI.

The resulting catalyst may be activated by heating in air and used in conventional olefin polymerization processes.

Having described the basic concepts of our invention, the following examples are set forth to illustrate specific embodiments.

### EXAMPLE 1

2900 lbs (≅ 1313,7kg) of silica-titania-chromium hydrogel (12% SiO₂) was mixed with 1370 lbs (≅ 620.6 kg) of 1-hexanol. The mixture was then heated at 98°C to remove and azeotropically distill the water from the pores of the hydrogel. The resulting xerogel contained 25 percent 1-hexanol expressed as percent total volatiles.

The hexanol-containing xerogel was heated in a rotating calciner maintained at a temperature of 510 to 677°C. The feed rate of the xerogel through the calciner was maintained at 125 lbs (≅ 56.6 kg/hour) while a mixture containing 22 volume percent air (4 SCFM (≅ 0.11 SCMM)) mixed with nitrogen (14 SCFM ≅ 0.396 SCMM) at 18 SCFM (≅ 0.509 SCMM) wherein SCMM means Standard cubic meter minute) total gas flow. The residence time of the xerogel in the calciner was 5 to 15 minutes.

A comparison (prior art) sample was prepared using the same conditions except the inclusion of oxygen was omitted. The calcined xerogel samples were analyzed and found to possess the following chemical/physical properties:

| Chemical (wt.%) | A (Invention) | B (Prior Art) |
|---|---|---|
| SiO₂ | 96.3 | 96.3 |
| Ti | 2.52 | 2.48 |
| Cr | 0.97 | 0.98 |
| C | 0.80 | 1.5 |
| Cr III | 0.97 | 0.98 |
| Cr VI | <0.01 | <0.01 |
| Total volatiles | 5.3 | 5.1 |
| Na₂O | 0.04 | 0.06 |

| Physical | | |
|---|---|---|
| Total pore volume (cc/g N₂) | 2.34 | 2.30 |
| Density (g/cc) | 0.21 | 0.21 |
| Surface Area (m²/g N₂) | 521 | 511 |

## Claims

1. A method for preparing an inorganic oxide gel-based chromium-containing catalyst wherein an inorganic oxide hydrogel is treated with an organic solvent to obtain a xerogel which is calcined to remove said organic solvent, characterised in that the calcination is conducted at a temperature of from 450 to 700°C in a gaseous atmosphere which comprises 3 to 6 volume percent oxygen admixed with an inert gas for a period of 5 to 15 minutes, whereby the carbon content of said xerogel is reduced to below one weight percent.

2. A method according to claim 1 wherein from 0.02 to 0.12 parts by weight oxygen is included in said atmosphere per part by weight carbon contained in said xerogel.

3. A method according to claim 1 or 2 wherein the xerogel contains up to 30 weight percent organic solvent prior to said calcination.

4. A method according to claim 1, 2 or 3 wherein the xerogel to be calcined contains Cr(III) and the calcined product contains one percent or less Cr(VI) based on the total Cr present in said xerogel.

5. A method according to any one of the preceding claims wherein the inorganic oxide gel incudes a gel selected from silica, silica-titania, chromium-silica, silica alumina, silica-titania-chromium, aluminum phosphate, alumina and mixtures thereof.

6. A method according to any one of the preceding claims wherein said organic solvent is an alcohol.

7. A method according to claim 6 wherein said alcohol is a C₅-C₆ alcohol.

8. A method according to any one of the preceding claims wherein said calcined xerogel is subsequently activated by heating in air at a temperature of from 400 to 900°C.

## Patentansprüche

1. Verfahren zur Herstellung von auf anorganischem Oxidgel basierendem chromhaltigem Katalysator, bei dem anorganisches Oxid-Hydrogel mit organischem Lösungsmittel behandelt wird, um ein Xerogel zu enthalten, das calciniert wird, um das organische Lösungsmittel zu entfernen, dadurch gekennzeichnet, daß die Calcinierung bei einer Temperatur von 450 bis 700°C in einer gasförmigen Atmosphäre, die 3 bis 6 Vol.% Sauerstoff gemischt mit Inertgas umfaßt, für einen Zeitraum von 5 bis 15 Minuten durchgeführt wird, wodurch der Kohlenstoffgehalt des Xerogels auf unter 1 Gew.% vermindert wird.

2. Verfahren nach Anspruch 1, bei dem pro Gewichtsteil des in dem Xerogel enthaltenen Kohlenstoffs 0,02 bis 0,12 Gewichtsteile Sauerstoff in der Atmosphäre eingeschlossen sind.

3. Verfahren nach Anspruch 1 oder 2, bei dem das Xerogel vor der Calcinierung bis zu 30 Gew.% organisches Lösungsmittel enthält.

4. Verfahren nach Anspruch 1, 2 oder 3 bei dem das zu calcinierende Xerogel Cr(III) enthält und das calcinierte Produkt bezogen auf das gesamte in dem Xerogel vorhandene Cr 1 % oder weniger Cr(VI) enthält.

5. Verfahren nach einem der vorhergehenden Ansprüche, bei dem das anorganische Oxidgel Gel ausgewählt aus Siliciumdioxid, Siliciumdioxid-Titandioxid, Chrom-Siliciumdioxid, Silicium-dioxid-Aluminiumoxid, Siliciumdioxid-Titandioxid-Chrom, Aluminiumphosphat, Aluminiumoxid und Mischungen derselben einschließt.

6. Verfahren nach einem der vorhergehenden Ansprüche, bei dem das organische Lösungsmittel ein Alkohol ist.

7. Verfahren nach Anspruch 6, bei dem der Alkohol ein C₅- bis C₆-Alkohol ist.

8. Verfahren nach einem der vorhergehenden Ansprüche, bei dem das calcinierte Xerogel nachfolgend durch Erhitzen in Luft auf eine Temperatur von 400 bis 900°C aktiviert wird.

## Revendications

1. Méthode de préparation d'un catalyseur contenant du chrome à base d'un gel d'oxyde inorganique où un hydrogel d'un oxyde inorganique est traité avec un solvant organique pour obtenir un xérogel qui est calciné pour éliminer ledit solvant organique, caractérisée en ce que la calcination est entreprise à une température de 450 à 750°C dans une atmosphère gazeuse qui comprend 3 à 6 pour cent en volume d'oxygène en mélange avec un gaz inerte pendant une période de 5 à 15 minutes, et ainsi la teneur en carbone dudit xérogel est réduite à moins de un pour cent en poids.

2. Méthode selon la revendication 1 où on incorpore de 0,02 à 0,12 partie en poids d'oxygène dans ladite atmosphère par partie en poids du carbone contenu dans ledit xérogel.

3. Méthode selon la revendication 1 ou 2 où le xérogel contient jusqu'à 30 pour cent en poids du solvant organique avant ladite calcination.

4. Méthode selon la revendication 1, 2 ou 3 où le xérogel à calciner contient Cr(III) et le produit calciné contient un pour cent ou moins de Cr(VI) en se basant sur Cr total présent dans ledit xérogel.

5. Méthode selon l'une quelconque des revendications précédentes où le gel d'oxyde inorganique contient un gel sélectionné parmi silice, silice-oxyde de titane, chrome-silice, silice alumine, silice-oxyde de titane-chrome, phosphate d'aluminium, alumine et leurs mélanges.

6. Méthode selon l'une quelconque des revendications précédentes où ledit solvant organique est un alcool.

7. Méthode selon la revendication 6 où ledit alcool est un alcool C₅-C₆.

8. Méthode selon l'une quelconque des revendications précédentes où ledit xérogel calciné est subséquemment activé par chauffage à l'air à une température de 400 à 900°C.
